# EUROPÄISCHE PATENTSCHRIFT

(11) **EP 1 452 785 B1**
(45) Veröffentlichungstag und Bekanntmachung des Hinweises auf die Patenterteilung: **05.10.2005**
(21) Anmeldenummer: 04003704.6
(22) Anmeldetag: 19.02.2004
(51) Int. Cl.: F16K 5/20, F16K 5/06

(54) **Kugelhahn**
Ball valve
Vanne à boisseau sphérique

(30) Priorität: 27.02.2003 DE 10308793
(43) Veröffentlichungstag der Anmeldung: 01.09.2004
(73) Patentinhaber: Flowserve Flow Control GmbH, 76275 Ettlingen (DE)
(72) Erfinder: Malischewsky, Dirk, 76227 Karlsruhe (DE)
(74) Vertreter: Geitz Truckenmüller Lucht

(56) Entgegenhaltungen:
- DE-A- 19 510 709
- GB-A- 2 213 564
- US-A- 3 617 025
- US-B1- 6 340 029

## Beschreibung

Die Erfindung betrifft einen Kugelhahn zum Schleusen von fließfähigen Medien, mit einem Gehäuse, das aus wenigstens zwei, jeweils einen Durchströmkanal als Durchströmweg aufweisenden Gehäuseteilen besteht und mit einem eine Durchgangsbohrung als Strömungsweg zum wahlweise Verbinden der Durchströmwege der Gehäuseteile aufweisenden, kugelförmigen Absperrorgan, das innerhalb des Gehäuses zwischen ringförmigen Dichtungen aufgenommen ist und das mittels einer Schaltwelle, vorzugsweise zu einer quer zu dem Strömungsweg verlaufenden Achse, zwischen einer den Strömungsweg freigebenden Öffnungslage und einer den Strömungsweg absperrenden Schließlage schaltbar ist, wobei wenigstens eine der das Absperrorgan zwischen sich aufnehmenden Dichtungen in einem der Gehäuseteile begrenzt axial beweglich gelagert und mit einer Dichtfläche an dem Absperrorgan andrückbar ist.

Derartige Kugelhähne sind beispielsweise aus der EP 0 854 308 A1 und der EP 0 889 269 A1 bekannt geworden. Bei diesen Kugelhähnen erfolgt die Abdichtung zwischen dem als Absperrkugel gestalteten Absperrorgan und dem letzteres aufnehmenden Gehäuse über eine ortsfeste und eine axial bewegliche Ringdichtung, welche die Absperrkugel zwischen sich aufnehmen und die in gegenüber dem Durchströmweg radial erweiterten Ringkammern angeordnet sind. Die axial bewegliche Ringdichtung wird mittels einer Tellerfeder oder eines Tellerfederpakets, die sich ihrerseits an einer die Ringkammer axial begrenzenden Schulter abstützt, an die Absperrkugel angepresst.

Kugelhähne dieser Art haben sich zum Schleusen sowohl flüssiger oder gasförmiger Medien als auch rieselförmiger Feststoffe bewährt. Beim Schalten der Kugelhähne mittels der Schaltwelle von der den Strömungsweg der Absperrkugel freigebenden Öffnungslage in die den Strömungsweg absperrende Schließlage und umgekehrt kann es jedoch zu einem unerwünschten Verschleiß der beteiligten Dichtungsflächen kommen. Ferner werden bedingt durch die stets auf eine der Ringdichtungen drückenden Tellerfedern in Verbindung mit den dadurch auftretenden Flächenpressungen vergleichsweise große Drehmomente zum Schalten, d. h. zum Drehen der Absperrkugel mittels der Schaltwelle benötigt. Dies erfordert entsprechend starke Schaltantriebe, die vergleichsweise viel Platz benötigen und teuer sind. Ferner ist die mit den Tellerfedern bzw. Tellerfederpaketen erzielbare Abdichtwirkung begrenzt.

Aus der US-PS 3 617 025 ist ein Kugelhahn mit von der Absperrkugel zurückziehbaren Dichtringen bekannt geworden, dessen Absperrkugel innerhalb eines Gehäuses aufgenommen ist, das aus einem mittig angeordneten Gehäusering und zwei beiderseits desselben angeordneten, ringförmigen End-Abschluss-Teilen mit jeweils daran angeschweißten Naben besteht, die wiederum mit Anschlussmitteln, wie Flanschen zum Anschluss an bzw. in einer Pipeline versehen sein können. Zur Abdichtung der End-Abschluss-Teile zu dem Gehäusering sind zwei O-Ring-Dichtungen erforderlich. Diese Konstruktion ist aufwändig und teuer. Die zurückziehbaren Dichtringen werden mit Hilfe von In-line-Drücken des zu schleusenden Mediums betätigt, wobei der Dichtdruck von dem Druck des zu schleusenden Mediums abhängt. Dadurch kann es bei niedrigen Drücken des zu schleusenden Mediums zu einer ungenügenden Abdichtung und folglich zu einer Leckage kommen.

Ein ähnlicher Kugelhahn ist aus der DE 195 10 709 A1 bekannt geworden. Auch dort ist der Dichtdruck der mit einem Dichtring versehenen Sitzringe proportional zu dem Druck des zu schleusenden Mediums, so dass es auch bei dieser Konstruktion zu einer ungenügenden Abdichtung bei geringen Drücken des zu schleusenden Mediums kommen kann. Die Sitzringe werden von einer Anpressfeder auf der Oberfläche des Kugelkükens in ständiger Anpresslage gehalten. Dadurch sind erhöhte Schaltkräfte bzw. -momente erforderlich und die Dichtringe unterliegen einem erhöhten Verschleiß.

Aus der GB 22 13 564 A und der DE 44 14 243 A1 sind Kugelhähne bekannt geworden, bei denen die Absperrkugel konstruktionsbedingt zwischen vier Gehäuseteilen aufgenommen ist. Dort werden die ringförmigen Dichtungen von ringförmigen Dichtungsstützkörpern mit Hilfe von sich an deren Rückseiten abstützenden Tellerfedern bzw. Spiralfedern stets an die Außenoberfläche der Absperrkugel angedrückt. Dieser Dichtdruck wird konstruktionsbedingt sogar noch verstärkt, wenn in den Dichtungsstützkörpern das zu schleusende Medium unter Druck ansteht bzw. hindurchfließt, mit der Folge der bereits vorstehend erwähnten Nachteile.

Aus der US-PS 6 340 029 ist ein Kugelhahn mit einem vielteiligen Gehäuse bekannt geworden. Dort ist die Absperrkugel konstruktionsbedingt zwischen einem mittig angeordneten Ventilkörper und zwei beiderseits desselben angeordneten mittleren Abdeckungen sowie zwei beiderseits derselben angeordneten Seitenabdeckungen aufgenommen, die jeweils zueinander mittels O-Ring-förmigen Dichtungen abgedichtet werden müssen. In den mittleren Abdeckungen ist jeweils wenigstens ein erster Zuführkanal vorgesehen und in den Seitenabdeckungen ist jeweils wenigstens ein zweiter Zuführkanal vorgesehen. Diese Zuführkanäle münden bis zu einer zwischen liegenden ringförmigen Schulter einer ringförmigen Gleitführung, die jeweils mit einer an der Außenoberfläche der Absperrkugel anpressbaren Dichtung versehen ist. Je nachdem, ob die Gleitführung mit der Dichtung an die Absperrkugel angepresst oder von der Absperrkugel abgehoben werden soll, muss Druckluft in den ersten Zuführkanal oder in den zweiten Zuführkanal eingeleitet werden. Diese Konstruktion ist aufwändig und teuer.

Demgemäß ist es eine Aufgabe der Erfindung, einen einfach und kostengünstig herstellbaren Kugelhahn zu schaffen, bei dem der Verschleiß beim Schalten reduziert ist, bei dem auch bei hohen Drücken der zu schleusenden Medien zum Schalten nur vergleichsweise geringe Drehmomente benötigt werden und bei dem auch bei niedrigen Drücken der zu schleusenden Medien eine große Dichtigkeit erreichbar ist.

Diese Aufgabe wird durch die Merkmale des Patentanspruchs 1 gelöst.

Bei der Erfindung geht es darum, wenigstens eine der das Absperrorgan zwischen sich aufnehmenden, axial beweglichen Dichtungen wahlweise mit einer erhöhten Flächenpressung an das Absperrorgan anzudrücken, wenn der Kugelhahn geöffnet oder geschlossen ist, d. h. nicht betätigt wird und während eines Schaltvorganges die Dichtung zu entlasten, d. h. mit einer geringeren Flächenpressung an das Absperrorgan anzudrücken, wobei vorzugsweise die Dichtung von dem Absperrorgan abgehoben wird. Ein Kernmerkmal der Erfindung ist es folglich, einen Kugelhahn mit einem aktiven Dichtsystem zur Verfügung zu stellen.

Durch diese Maßnahmen lässt sich der Verschleiß zwischen dem Absperrorgan und den dieses aufnehmenden Dichtungen deutlich reduzieren, und zum Schalten werden nur geringe Drehmomente benötigt, so dass vergleichsweise kleine Schaltantriebe einsetzbar sind, welche einen geringeren Platzbedarf benötigen und die vergleichsweise kostengünstig sind.

Von besonderem Vorteil ist es, wenn die Dichtfläche der Dichtung in der Andrücklage und/oder in der Entlastungslage ohne Einwirkung von an der Dichtung angreifenden Federkräften an das Absperrorgan angedrückt bzw. abgehoben ist und/oder wenn die Dichtung ohne Einwirkung von an der Dichtung angreifenden Federkräften zwischen der Andrücklage und der Entlastungslage schaltbar ist. Durch den Wegfall der nach dem Stand der Technik vorgesehenen Federn, die dazu bestimmt sind, die Dichtung stets mit einer gewissen Flächenpressung an das Absperrorgan dichtend anzudrücken, lassen sich der Verschleiß und die Drehmomente beim Schalten weiter reduzieren.

Dadurch, dass wenigstens eine der das Absperrorgan zwischen sich aufnehmenden Dichtungen mit einem zu dem Durchströmkanal abgedichtet angeordneten Schaltkanal verbunden ist, der wahlweise mit Druck eines separaten Arbeitsmediums beaufschlagbar ist, so dass die Dichtung zwischen der Andrücklage, in der ihre Dichtfläche an das Absperrorgan angedrückt ist und der Entlastungslage, in der die Dichtfläche der Dichtung mit einer gegenüber der Dichtanlage reduzierten Flächenpressung an dem Absperrorgan anliegt oder in der die Dichtung von dem Absperrorgan abgehoben ist, schaltbar bzw. überführbar ist, ist die Dichtung selbst dann schaltbar, wenn in der Öffnungslage des Absperrorgans ein fließfähiges Medium durch die Durchströmkanäle sowie die diese verbindende Durchgangsbohrung des Absperrorgans unter hohem und konstantem Druck hindurchfließt. Ferner lassen sich durch die vorgenannten Maßnahmen höhere Schließdrücke als bei Verwendung der aus dem Stand der Technik bekannten Tellerfedern erzielen, mit der Folge einer besseren Abdichtung und damit einer geringeren Leckage. Bei einem Ausfall des Druckmediums, das zur Beaufschlagung des Schaltkanals mit Druck eingesetzt wird, bleibt der Kugelhahn leichtgängig, z. B. elektropneumatisch schaltbar, was eine erhöhte Betriebssicherheit bedeutet. Außerdem ist durch die vorstehenden Maßnahmen im Unterschied zu den aus dem Stand der Technik bekannten Konstruktionen, bei denen der Dichtdruck proportional zu dem Druck des zu schleusenden Mediums ist, schon bzw. auch bei niedrigen Drücken des zu schleusenden Mediums eine sehr gute Abdichtung möglich.

Von besonderem Vorteil ist es, wenn die Dichtung in Richtung des Absperrorgans weisende Arbeitsflächen und davon weg weisende Kontaktflächen aufweist, die mit dem zu schleusenden Medium beaufschlagt sind, wenn der Durchströmkanal des diese Dichtung aufnehmenden Gehäuseteils mit dem zu schleusenden Medium gefüllt bzw. durchströmt ist, wobei eine Projektionsfläche der in eine senkrecht zur Axialverschieberichtung der Dichtung angeordneten Projektionsebene projizierten Arbeitsflächen gleich groß ist oder größer ist als eine Projektionsfläche der in dieselbe Projektionsebene projizierten Kontaktflächen.

Wenn die Arbeitsflächen gleich groß wie die Kontaktflächen sind, wird bei einer Druckentlastung des Schaltkanals sichergestellt, dass die Dichtung nicht bedingt durch den Innendruck des zu schleusenden Mediums weiterhin mit ihrer Dichtfläche an dem Absperrorgan mit einer erhöhten Flächenpressung angedrückt ist, sondern im Gegenteil eine Entlastungslage mit deutlich geringerem oder sogar auf Null reduzierten Flächenpressungen erreichbar sind. Letzteres kann dadurch unterstützt werden, dass die projizierten Arbeitsflächen größer sind als die projizierten Kontaktflächen, so dass bei einer Druckentlastung des Schaltkanals die Dichtung von dem Absperrorgan abgehoben wird, weil die Dichtung im Rahmen ihrer axialen Beweglichkeit durch den Innendruck des zu schleusenden Mediums in eine von dem Absperrorgan weg weisende Richtung gedrückt wird.

Eine weitere Verbesserung kann erreicht werden, wenn die Dichtfläche der Dichtung in der Andrücklage und/oder in der Entlastungslage ohne Einwirkung von an der Dichtung angreifenden mechanischen Kräften an das Absperrorgan angedrückt bzw. abgehoben ist und/oder wenn die Dichtung ohne Einwirkung von an der Dichtung angreifenden mechanischen Kräften zwischen der Andrücklage und der Entlastungslage schaltbar ist.

Gemäß einer weiter verbesserten Ausführungsvariante kann vorgesehen sein, dass die Dichtfläche der Dichtung in der Andrücklage und/oder in der Entlastungslage ausschließlich unter Einwirkung von an der Dichtung angreifenden hydraulischen und/oder pneumatischen Kräften an das Absperrorgan angedrückt ist und/oder dass die Dichtung ausschließlich unter Einwirkung von an der Dichtung angreifenden hydraulischen und/oder pneumatischen Kräften zwischen der Andrücklage und der Entlastungslage schaltbar ist.

Ferner kann vorgesehen sein, dass der Schaltkanal über ein fluides Arbeitsmedium mit positivem Druck beaufschlagbar ist. Dies ermöglicht günstige Abdichtverhältnisse bedingt durch hohe realisierbare Dicht-Flächenpressungen zwischen der Dichtung und dem Absperrorgan, und es lassen sich standardisierte und kostengünstige Schaltungen realisieren.

Es ist ferner zweckmäßig, wenn der Schaltkanal im Bereich der Dichtung quer zu dem Durchströmweg angeordnet ist. Es ist außerdem vorteilhaft, wenn der Schaltkanal in einen Schaltraum mündet, der von quer zu dem Durchströmweg verlaufenden Wandteilen der Dichtung einerseits und von Wandteilen des diese Dichtung aufnehmenden Gehäuseteils andererseits begrenzt ist. Dadurch lassen sich günstige Anschluss- und Kraftübertragungsverhältnisse erreichen.

Dabei ist es vorteilhaft, wenn der Schaltraum von vorzugsweise parallel zueinander angeordneten Dichtringstirnflächen der Dichtung einerseits und des diese Dichtung aufnehmenden Gehäuseteils andererseits begrenzt ist.

Besonders günstige Abdichtverhältnisse auch über lange Zeit lassen sich erreichen, wenn die Dichtung über beiderseits des Schaltraumes angeordnete Ringdichtungen zu dem Durchströmkanal des diese Dichtung aufnehmenden Gehäuseteils und zu der Durchgangsbohrung des Absperrorgans abgedichtet ist.

Besonders günstige Antrieb- und Einbauverhältnisse einerseits sowie vorteilhafte Möglichkeiten für eine durch die Konstruktion der Dichtung erreichbare Druckentlastung lassen sich erreichen, wenn die Dichtung an ihrem Außenumfang einen-stufenförmigen Längsquerschnitt aufweist, der begrenzt ist von beiderseits des Schaltraumes angeordneten Stützflächen, über die sich die Dichtung an gegenüberliegenden Lagerflächen des die Dichtung aufnehmenden Gehäuseteils abstützen kann und die eine begrenzte axiale Bewegung der Dichtung ermöglichen bzw. vermitteln, und der ferner begrenzt ist von dem quer zu dem Durchströmweg verlaufenden und den Schaltraum begrenzenden Wandteil. Dabei ist es zweckmäßig, wenn die Stützflächen parallel zueinander angeordnet sind, wodurch sich günstige Axial-Verschiebeverhältnisse und einfache Fertigungsmöglichkeiten realisieren lassen.

Dabei ist es besonders vorteilhaft, wenn die zwischen dem Schaltraum und der an dem Absperrorgan anlegbaren Dichtfläche der Dichtung angeordnete Stützfläche einerseits des Schaltraumes gegenüber der Stützfläche andererseits des Schaltraumes quer nach außen versetzt angeordnet ist.

Besonders günstige Schaltverhältnisse bei einer geringen Leckage lassen sich erreichen, wenn ausgehend von der Öffnungslage bzw. von der Schließlage des Absperrorgans, in welcher der Schaltkanal mit Druck beaufschlagt ist, so dass die Dichtung mit ihrer Dichtfläche an dem Absperrorgan angedrückt ist, zum Zwecke des Schaltens des Absperrorgans mittels der Schaltwelle, der Schaltkanal von Druck entlastet wird, so dass die Dichtung ihre Entlastungslage einnehmen kann, wobei im Wesentlichen gleichzeitig das Absperrorgan mittels der Schaltwelle in seine Schließlage bzw. in seine Öffnungslage geschaltet wird.

Zweckmäßiger Weise schließen sich die Arbeitsflächen quer zu dem Durchströmweg nach innen an die Dichtfläche der Dichtung an und können auf diese Weise unmittelbar mit dem zu schleusenden Medium in Kontakt stehen.

Es ist ferner vorteilhaft, wenn jeweils wenigstens eine der ringförmigen Dichtungen, die an beiden Gehäuseteilen begrenzt axial beweglich gelagert sind und die das Absperrorgan zwischen sich aufnehmen, mit Hilfe einer Einrichtung zwischen einer axialen Andrücklage, in der die Dichtungen mit einer Dichtfläche an das Absperrorgan angedrückt sind und einer Entlastungslage, in der die Dichtflächen der Dichtungen mit einer gegenüber der Dichtanlage reduzierten Flächenpressung an dem Absperrorgan anliegen oder in der die Dichtungen von dem Absperrorgan abgehoben sind, schaltbar ist.

Dadurch lassen sich besonders günstige Abdicht- und Schaltverhältnisse einerseits sowie günstige Montagemöglichkeiten andererseits erreichen, weil dann eine Montage der Dichtungen unabhängig von der jeweiligen Einbaulage möglich ist. Die vorstehend genannten Maßnahmen lassen sich im Rahmen der Ausführbarkeit beliebig miteinander kombinieren.

Weitere Merkmale, Vorteile und Gesichtspunkte der Erfindung lassen sich dem nachfolgenden Beschreibungsteil entnehmen, in dem ein bevorzugtes Ausführungsbeispiel der Erfindung anhand der Figuren erläutert ist. Es zeigen:
- Fig. 1: einen Längsquerschnitt durch einen Kugelhahn mit zwei erfindungsgemäß schaltbaren Dichtungen zwischen dem Gehäuse und dem Absperrorgan;
- Fig. 2: einen vergrößerten Teilschnitt des Kugelhahns im Bereich einer der axial beweglichen, schaltbaren Dichtungen entlang einer Schnittlinie 2-2 in Fig. 1;
- Fig. 3: einen stark vergrößerten Teilschnitt des Kugelhahns im Bereich einer der schaltbaren Dichtungen entlang der Schnittlinie 2-2 in Fig. 1, wobei aus Darstellungsgründen die Verschlussschraube zum wahlweise Verschließen des Schaltkanals weggelassen wurde, um eine Einbausituation zu verdeutlichen, in welcher der Kugelhahn erfindungsgemäß schaltbar ist;
- Fig. 4: einen Schaltplan zur Verdeutlichung einer vorteilhaften Steuerung eines Kugelhahnes mit schaltbaren Dichtungen, welche das Absperrorgan zwischen sich aufnehmen und mit einem Schaltantrieb zur Betätigung der Schaltwelle.

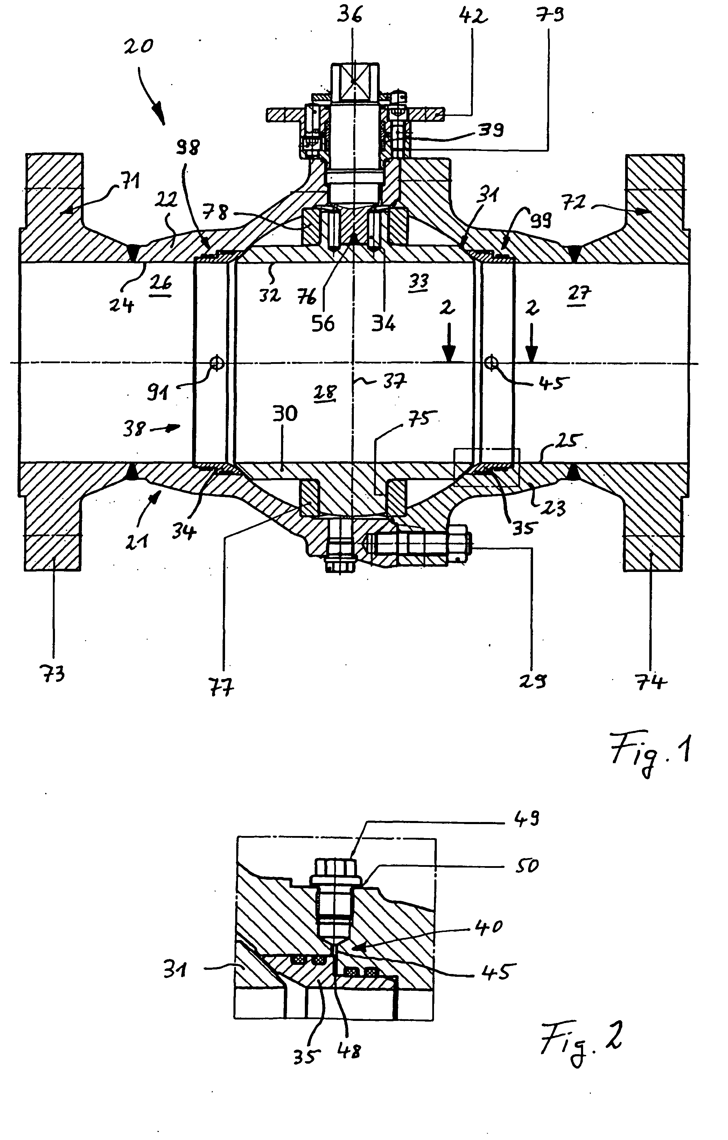

Der in Fig. 1 in einem Längsschnitt dargestellte Kugelhahn 20 besitzt ein Gehäuse 21, das aus zwei einander zu einer angenäherten Kugelform ergänzenden Gehäuseteilen 22, 23 besteht. Die beiden Gehäuseteile 22, 23 sind mittels Schrauben 29 in hier im einzelnen nicht interessierender Weise miteinander verbunden. Die Gehäuseteile 22, 23 haben miteinander fluchtende Durchströmwege 26, 27. An den voneinander abgewandten Seiten des Gehäuses 21 sind an die Gehäuseteile 22, 23 Rohrabschnitte 71, 72 mit Anschlussflanschen 73, 74 angeschweißt, die den Einbau des Kugelhahns 20 in eine nicht dargestellte Rohrleitung vermitteln.

Innerhalb des Gehäuses 21 ist als Absperrorgan 30 eine Absperrkugel 31 mit einer Durchgangsbohrung 32 zwischen in den Gehäuseteilen 22, 23 aufgenommenen Dichtungen 34, 35 angeordnet. Mittels einer Schaltwelle 36 ist die Absperrkugel 31 um eine Drehachse 37 zwischen der in Fig. 1 gezeigten Öffnungslage 38, in der die Durchgangsbohrung 32 mit den Durchströmwegen 26, 27 der Gehäuseteile 22, 23 fluchtet, und einer gegenüber der Öffnungslage 38 um 90 Grad verschwenkten Schließlage, in der die Durchströmwege 26, 27 voneinander getrennt sind, schaltbar und in jeder Zwischenstellung einstellbar. Die Drehachse 37 der Schaltwelle 36 verläuft rechtwinklig zur Durchgangsbohrung 32 der Absperrkugel 31.

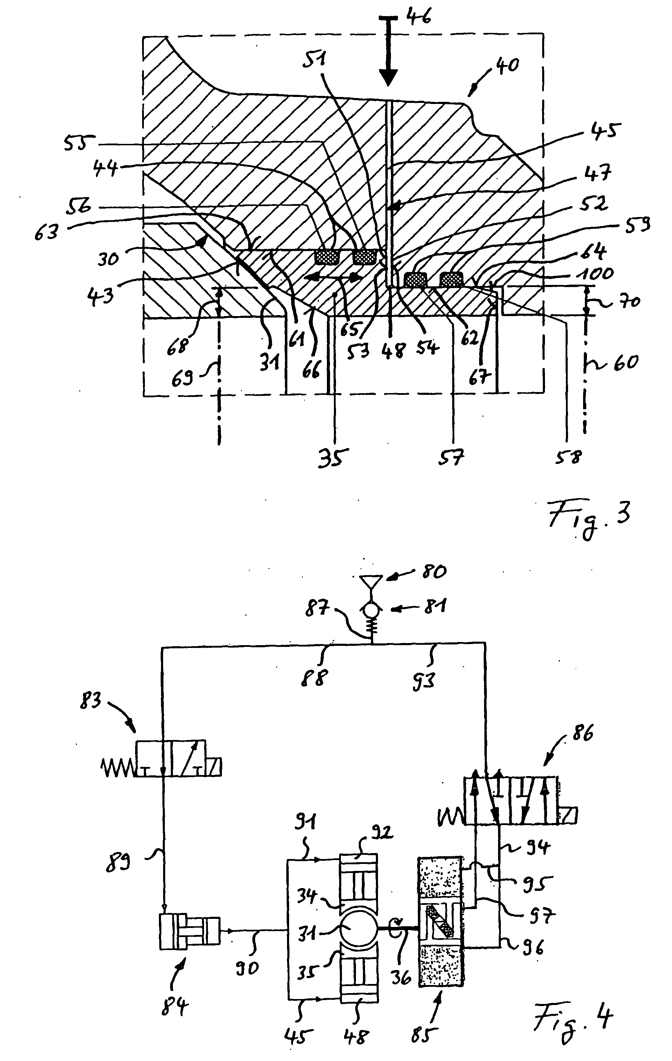

Die Absperrkugel 31 ist mittels auf einander gegenüberliegenden Seiten angedrehter Lagerzapfen 75, 76 in im Gehäuse 21 aufgenommenen Lagerbuchsen 77, 78 drehbar gelagert. Die Schaltwelle 36 erstreckt sich durch einen Gehäuseaufsatz 79 fort und ist in diesem in bekannter Weise drehbar gelagert sowie mittels einer Stoffbuchsenanordnung 39 gegenüber dem die Absperrkugel 31 aufnehmenden Gehäuseinnenraum abgedichtet sowie in hier nicht weiter interessierender Weise drehfest mit der Absperrkugel 31 verbunden. Der Gehäuseaufsatz 79 ist mit einer Anschlussplatte 42 versehen, auf welcher ein Schalt-Antrieb 85 montierbar ist, der wiederum drehfest mit der Schaltwelle 36 verbindbar ist (Fig. 4).

Die Schaltbetätigung des Kugelhahns 20 zwischen der Offenstellung und der Schließlage der Absperrkugel 31 bzw. umgekehrt, erfolgt mittels eines hier als pneumatischer Schaltantrieb 85 fungierenden Stellmotors, der mit der Schaltwelle 36 drehfest gekoppelt ist. Es versteht sich, dass die Schaltbetätigung des Kugelhahns 20 auch mittels eines nicht dargestellten Handrades oder mittels ähnlicher Einrichtungen manuell erfolgen kann, die an dem von der Absperrkugel 31 entfernten Ende auf der Schaltwelle 36 aufgenommen und mit dieser drehfest verbunden sein können.

Die dem Gehäuseteil 22 zugeordnete Dichtung 34 und die dem Gehäuseteil 23 zugeordnete Dichtung 35 sind jeweils in einer gegenüber den sich durch diese Gehäuseteile 22 und 23 hindurch erstreckenden Durchströmwege 26 und 27 radial erweiternden Ringkammer 98 bzw. 99 aufgenommen und sind dort jeweils begrenzt axial beweglich gelagert. Jede Dichtung 34, 35 besitzt, wie die Fig. 2 und 3 zeigen, einen vorzugsweise metallischen Dichtkörper mit einer an der Absperrkugel 31 andrückbaren Dichtfläche 43, die der sphärischen Kugelform der Absperrkugel 31 angepaßt gestaltet ist. In dem in Fig. 1 gezeigten Ausführungsbeispiel sind die Dichtungen 34 und 35 identisch gestaltet und auch deren Abdichtung gegenüber den Gehäuseteilen 22 und 23 ist jeweils identisch.

Die Dichtung 35 ist als ein geschlossener Ring gestaltet und weist an ihrem Außenumfang zylindrische Stützflächen 61 und 62 auf, die parallel zueinander angeordnet sind. Die Stützfläche ist gegenüber der Stützfläche 62 radial nach außen versetzt angeordnet, so dass der Außenumfang des die Stützfläche 61 aufweisenden Wandteils der Dichtung 35 größer ist als der Außenumfang des die Stützfläche 62 aufweisenden Wandteils der Dichtung 35. Dadurch weist die Dichtung 35 an ihrem Außenumfang einen stufenförmigen Längsquerschnitt auf. Die Dichtung 35 ist über die Stützflächen 61 und 62 an gegenüberliegenden Lagerflächen 63 und 64 der Ringkammer 99 abgestützt gelagert, wobei die zylindrischen Lagerflächen 63 und 64 ebenfalls parallel zueinander angeordnet sind. Durch diese Anordnung und Gestaltung der Stützflächen 61 und 62 einerseits und der Lagerflächen 63 und 64 anderseits ist eine axiale Verschiebe-Bewegung der Dichtung 35 in Richtung des Doppelpfeils 65, also parallel zu dem Durchströmweg 26, ermöglicht.

Am Übergang von der Stützfläche 61 zu der Stützfläche 62 weist die Dichtung 35 einen Wandteil 51 mit einer Ringstirnfläche 53 auf, die senkrecht zu den Stützflächen 61 und 62 angeordnet ist. Der Abstand dieser Ringstirnfläche 53 von der Dichtfläche 43 der Dichtung 35 ist derart gewählt, dass bei an der Außenoberfläche der Absperrkugel 31 anliegender Dichtfläche 43 der Dichtung 35 ein axialer Schaltraum 48 zwischen der Ringstirnfläche 53 und der gegenüber liegenden Ringstirnfläche 54 eines Wandteils 52 des diese Dichtung 35 aufnehmenden Gehäuseteils 23 ausgebildet ist. Dieser ringförmige Schaltraum 48 ermöglicht eine begrenzte axiale Verschiebbarkeit der Dichtung 35 in Richtung des Doppelpfeils 65.

In den Schaltraum 48 mündet ein hier senkrecht zum Durchströmweg 26 bzw. senkrecht zu der Mittellängsachse des Gehäuseteils 23 angeordneter, zylindrischer Schaltkanal 45, wobei in dem in Fig. 3 gezeigten Längsquerschnitt die Innenoberflächen des Schaltkanals 45 mit den Ringstirnflächen 53 und 54 fluchten, die den Schaltraum 48 axial begrenzen.

Der Schaltkanal 45 ist gegenüber der Drehachse 37 der Schaltwelle 36 um einen Winkel von hier 90 Grad im Uhrzeigersinn versetzt angeordnet. Im Unterschied dazu ist der Schaltkanal 91, welcher der begrenzt axial beweglichen Dichtung 34 zugeordnet ist, die wiederum in der Ringkammer 98 des Gehäuseteils 22 gelagert ist, gegenüber der Drehachse 37 der Schaltwelle 36 um einen Winkel von hier 90 Grad gegen den Uhrzeigersinn versetzt angeordnet, so dass beide Schaltkanäle 45 und 91 sich auf derselben Seite des Kugelhahns 20 erstrecken. Diese Anordnung der Schaltkanäle 45 und 91 ermöglicht günstige Platzverhältnisse zum Anschluss von hydraulischen Anschlussleitungen, die vorzugsweise zu einem gemeinsamen Hydraulik-Kanal 90 zusammengeführt werden (Fig. 4). Im übrigen gelten die nachstehenden Verhältnisse, die am Beispiel des Schaltkanals 45 und der Dichtung 35 beschrieben werden, in gleicher Weise für den Schaltkanal 91 und die Dichtung 34.

Der Schaltraum 48 kann über den Schaltkanal 45 mit Druck (Pfeil 46) beaufschlagt werden, indem vorzugsweise ein in den Schaltkanal 45 und den Schaltraum 48 eingeleitetes hydraulisches Arbeitsmedium 47 mit Druck (Pfeil 46) beaufschlagt wird. Zu diesem Zwecke mündet der Schaltkanal 45 an seinem von der Dichtung 35 weg weisenden Ende in eine Anschlussbohrung, die hier mit einem Innengewinde zum Anschluss einer Leitung 45 (Fig. 4) versehen ist, die wiederum schaltbar mit Druck beaufschlagbar ist.

Eine Beaufschlagung des Schaltraumes 48 mit positivem Druck (Pfeil 46) bewirkt, dass die Dichtung 35 in axialer Richtung auf die Absperrkugel 31 bewegt wird, bis ihre Dichtfläche 43 dort mit einer dem eingestellten Druck (Pfeil 46) entsprechenden Flächenpressung angedrückt wird.

Der Schaltkanal 45 und der Schaltraum 48 sind gegenüber dem Durchströmkanal 25 mit Hilfe von als O-Ringe gestalteten Ringdichtungen 55, 56, 57, 58 abgedichtet. Dabei sind die beiden Ringdichtungen 55 und 56 zur Abdichtung zwischen der Stützfläche 63 und der Lagerfläche 61 zwischen dem Schaltkanal 45 und der Dichtfläche 43 der Dichtung 35 angeordnet und die beiden Ringdichtungen 57 und 58 sind zur Abdichtung zwischen der Stützfläche 62 und der Lagerfläche 64 zwischen dem Schaltkanal 45 und der von der Dichtfläche 43 weg weisenden, stirnseitigen, ringförmigen Kontaktfläche 67 der Dichtung 35 angeordnet. Die Ringdichtungen 55 und 56 sind in axial beabstandeten, parallelen Ringnuten 44 der Dichtung 35 aufgenommen, die einen trapezförmigen Querschnitt aufweisen und die nach außen offen sind. Die Ringdichtungen 57 und 58 sind ebenfalls in axial beabstandeten parallelen, nach außen offenen Ringnuten 59 aufgenommen, die jedoch im Unterschied zu den Ringnuten 44, in dem die Stützfläche 62 aufweisenden Wandteil der Dichtung 35 gegenüberliegenden Wandteil des Gehäuseteils 32 angeordnet sind. Die unmittelbar benachbart zu dem Schaltkanal 45 bzw. dem Schaltraum 48 angeordneten Ringdichtungen 55 und 57 bestehen aus einem auf das Arbeitsmedium 47 abgestimmt gestalteten Material, während die Ringdichtungen 56 und 58 aus einem auf das zu schleusende Medium 28 abgestimmt gestalteten Material bestehen.

Die Dichtung 35 weist im Anschluss an die Dichtfläche 43 eine sich schräg nach innen von der Absperrkugel 31 weg erstreckende Arbeitsfläche 66 auf, die gegenüber der Dichtfläche 43 geringfügig zurückversetzt und in einem flacheren Winkel angeordnet ist. Diese Arbeitsfläche 66 steht unmittelbar mit dem zu schleusenden Medium 28 in Kontakt, wenn der Durchströmkanal 25 mit Medium gefüllt bzw. durchströmt ist. Die Projektion dieser Arbeitsfläche 66 in eine senkrecht zum Durchströmweg 26 bzw. senkrecht zur Mittelachse des Gehäuseteils 23 angeordneten Projektionsebene 69, ergibt eine wirksame Projektionsfläche 68. Diese wirksame Projektionsfläche 68 ist in dem gezeigten Ausführungsbeispiel gleich groß wie eine wirksame Projektionsfläche 70 der sich am anderen Ende der Dichtung 35 befindlichen Kontaktflächen, d. h. der endseitigen Kontaktfläche 67 und der sich nach außen anschließenden und zur Dichtfläche 43 hin geneigten Schrägfläche 100, wobei diese Projektionsfläche 70 durch eine Projektion dieser Kontakt flächen 67, 100 in eine parallel zur Projektionsebene 69 angeordnete Projektionsebene 60 erreicht wird. Die Kontaktflächen 67 und 100 stehen ebenfalls mit dem zu schleusenden Medium 28 unmittelbar in Kontakt, wenn der Durchströmkanal 25 mit dem zu schleusenden Medium 28 gefüllt ist bzw. durchströmt ist und wenn die Dichtung 35 mit ihrer Dichtfläche 43 an der Absperrkugel 31 anliegt.

Bedingt durch die im Ausführungsbeispiel gleich großen wirksamen projizierten Arbeitsflächen 68 und die von diesem weg weisenden projizierten Kontaktflächen 70, heben sich die durch das zu schleusende Medium 28 auf die Kontaktflächen 67, 100 einerseits und die Arbeitsfläche 66 andererseits ausgeübten Druckkräfte auf, mit der Folge, dass die Druckkräfte des Mediums 28 die Dichtung 35 in ihrer axialen Lage nicht verschieben, insbesondere die Dichtung 35 mit ihrer Dichtfläche 43 nicht mit einer erhöhten Flächenpressung an die Absperrkugel 31 andrücken. Auf diese Weise wird sichergestellt, dass sich eine Druckentlastung des Schaltraumes 48 in entsprechender Höhe auch auf eine Reduktion der Flächenpressung auswirkt, mit der die Dichtung 35 mit ihrer Dichtfläche 43 auf die Absperrkugel 31 drückt.

Bei einer vollständigen Druckentlastung des Schaltraumes 48, mithin, wenn der Druck (Doppelpfeil 46) im Schaltkanal 45 auf den Wert Null reduziert wird, wirken dann auch keine wesentlichen Kräfte der Dichtung 35 auf die Absperrkugel mehr, so dass ein Umschalten des Kugelhahns 20, also eine Drehung der Absperrkugel 31 durch Drehung der Schaltwelle 36, unter vollständiger Entlastung der Dichtung 35 möglich ist. Dadurch ist der Verschleiß zwischen der Dichtfläche 43 der Dichtung 35 und gegenüberliegenden Anlageflächen der Absperrkugel 31 während des Schaltens, also aufgrund von Schaltvorgängen, minimiert.

Dieser Effekt kann weiter verbessert werden, wenn die Projektionsfläche 68 der Arbeitsfläche 66 größer gewählt wird als die Projektionsfläche 70 der Kontaktflächen 67, 100. Denn dann wirkt sich ein durch das zu schleusende Medium 28 auf die Dichtung 35 ausgeübter Druck derart aus, dass eine resultierende Kraft auf die Dichtung indiziert wird, welche die Dichtung 35 versucht von der Absperrkugel 31 wegzudrücken. Dies führt bei einer vollständigen Druckentlastung des Schaltraumes 48 dazu, dass die Dichtung 35 von der Absperrkugel 31 abgehoben wird, so dass dann kein Verschleiß mehr an der Dichtfläche 43 und an den gegenüberliegenden Anlageflächen der Absperrkugel 31 mehr auftreten kann.

In Fig. 4 ist anhand eines Schaltplanes ein vorteilhaftes Ausführungsbeispiel für eine Schaltanordnung wichtiger Komponenten der Erfindung dargestellt. Dabei ist 80 ein Druckluftanschluss zum Anschluss einer nicht gezeigten Druckluftpumpe. Die von dieser erzeugte Druckluft kann über das Rückschlagventil 81 durch den Versorgungskanal 87 geleitet werden. Dieser spaltet sich auf in einen Arbeitskanal 88 sowie einen Arbeitskanal 93. In dem Arbeitskanal 88 kann die Druckluft über das Rückschlagventil 82 zu einem 3/2-Wegeventil geleitet werden, wobei in der in Fig. 4 gezeigten Stellung des 3/2-Wegeventils 83 die Druckluft durch dieses Ventil in den Arbeitskanal 89 geleitet wird, der wiederum in einen Druckverstärker 84 mündet. In diesem Druckverstärker 84 wird der durch die Druckluft vermittelte Druck in einem abgehenden Hydraulikkanal 90 verstärkt, d. h. der Druckverstärker wird auf seiner Eingangsseite mit Druckluft gespeist, während auf seiner Ausgangsseite der Druck über ein hydraulisches Medium übertragen wird. Der Hydraulikkanal 90 zweigt sich in zwei Schaltkanale 45 und 91 auf. Der Schaltkanal 45 mündet in den Schaltraum 48, welcher der Dichtung 35 zugeordnet ist, während der Schaltkanal 91 in den Schaltraum 92 mündet, welcher der Dichtung 34 zugeordnet ist. Diese axial beweglichen Dichtungen 34 und 35 können also gemeinsam über den Hydraulik-Kanal 90 mit Druck beaufschlagt werden, um so mit ihren Dichtflächen an der Absperrkugel 31 angedrückt werden zu können.

Die Absperrkugel 31 ist drehfest mit der Schaltwelle 36 verbunden, die wiederum drehfest mit einem Antriebselement des Schall-Antriebs 85 verbunden ist, mit dessen Hilfe eine Drehung der Absperrkugel 31 um 90 Grad von der Öffnungsstellung in die Schließstellung oder umgekehrt aber auch in beliebigen Zwischenstellungen möglich ist. Der Schalt-Antrieb 85 wird pneumatisch gesteuert. Zu diesem Zwecke kann Druckluft über den Arbeitskanal 93 zugeführt werden, wobei das Umschalten in die Öffnungsstellung bzw. in die Schließstellung mit Hilfe eines 5/2-Wegeventils 86 erreicht werden kann. In der in Fig. 4 gezeigten Schaltstellung des 5/2-Wegeventils 86 kann die Druckluft über den Kanal 93 in einen mit dem Ausgang des Ventils verbundenen Kanal 94 geleitet werden, der sich in die Kanäle 95 und 96 aufteilt, welche eine Umschaltung des Schalt-Antriebes 85 ermöglichen. Die Druckluft wird dabei über den Kanal 97 in das 5/2-Wegeventil 86 zurückgeführt und kann dort entlüftet werden.

Zur Druckentlastung der Dichtungen 34 und 35 wird das 3/2-Wegeventil 83 in seine zweite Stellung umgeschaltet, mit der Folge, dass die in der Druckluftkammer des Druckverstärkers 84 sowie in dem Arbeitskanal 89 komprimierte Druckluft dann über das 3/2-Wegeventil 83 entlüftet werden kann, so dass der Hydraulik-Kanal 90 von Druck entlastet wird. Sobald dieser Zustand erreicht ist, jedoch vorzugsweise im Wesentlichen gleichzeitig, wird das 5/2-Wegeventil 86 in seine zweite Stellung umgeschaltet, so dass dann die Druckluft über den Arbeitskanal 93 in den zuvor als Entlüftungskanal dienenden Kanal 97 gelangen kann, um auf diese Weise eine Dreh-Rückstellung der Absperrkugel 31 um 90 Grad mit Hilfe des Schall-Antriebes 85 zu erreichen. In dieser Stellung des 5/2-Wegeventils 86 wird die abströmende Druckluft über die Kanäle 95 und 96 in den Kanal 94 geleitet und kann von dort über das 5/2-Wegeventil 86 entlüftet werden.

## Patentansprüche

1. Kugelhahn zum Schleusen von fließfähigen Medien (28), mit einem Gehäuse (21), das aus wenigstens zwei jeweils einen Durchströmkanal (24, 25) als Durchströmweg (26, 27) aufweisenden Gehäuseteilen (22, 23) besteht, und mit einem eine Durchgangsbohrung (32) als Strömungsweg (33) zum wahlweise Verbinden der Durchströmwege (26, 27) der Gehäuseteile (22, 23) aufweisenden kugelförmigen Absperrorgan (30), das innerhalb von nur zwei Gehäuseteilen (22, 23) des Gehäuses (21) zwischen ringförmigen Dichtungen (34, 35) aufgenommen ist und das mittels einer Schaltwelle (36) zwischen einer den Strömungsweg (33) freigebenden Öffnungslage (38) und einer den Strömungsweg (33) absperrenden Schließlage schaltbar ist, wobei wenigstens eine der das Absperrorgan (30) zwischen sich aufnehmenden Dichtungen (34, 35) in einem der Gehäuseteile (22, 23) begrenzt axial beweglich gelagert und mit einer Dichtfläche (43) an dem Absperrorgan (30) andrückbar ist, **dadurch gekennzeichnet, dass** wenigstens eine Dichtung (34, 35) der das Absperrorgan (30) zwischen sich aufnehmenden Dichtungen (34, 35) mit einer Einrichtung (40) gekoppelt ist, mittels derer die Dichtung (34, 35) zwischen einer axialen Andrücklage in der die Dichtfläche (43) der Dichtung (34, 35) an das Absperrorgan (30) angedrückt ist, und einer Entlastungslage, in der die Dichtfläche (43) der Dichtung (34, 35) mit einer gegenüber der Andrücklage reduzierten Flächenpressung am dem Absperrorgan (30) anliegt oder in der die Dichtung (34, 35) von dem Absperrorgan (30) abgehoben ist, schaltbar ist, wobei die Dichtfläche (43) der Dichtung (34, 35) in der Andrücklage ohne Einwirkung von an der Dichtung (34, 35) angreifenden Federkräften an das Absperrorgan (30) angedrückt ist und wobei wenigstens eine der das Absperrorgan (30) zwischen sich aufnehmenden Dichtungen (34, 35) mit einem zu dem Durchströmkanal (24, 25) abgedichtet angeordneten Schaltkanal (45) verbunden ist, der wahlweise mit Druck (Pfeil 46) eines separaten Arbeitsmediums (47) beaufschlagbar ist, so dass die Dichtung (34, 35) zwischen der Andrücklage, in der die Dichtfläche (43) der Dichtung (34, 35) an das Absperrorgan (30) angedrückt ist, und der Entlastungslage, in der die Dichtfläche (43) der Dichtung (34, 35) mit einer gegenüber der Andrücklage reduzierten Flächenpressung an dem Absperrorgan (30) anliegt oder in der die Dichtung (34, 35) von dem Absperrorgan (30) abgehoben ist, schaltbar ist, und wobei die Dichtung (34, 35) in Richtung des Absperrorgans (30) weisende Arbeitsflächen (66) und davon weg weisende Kontaktflächen (67, 100) aufweist, die mit dem zu schleusenden Medium (28) beaufschlagt sind, wenn der Durchströmkanal (24, 25) des diese Dichtung (34, 35) aufnehmenden Gehäuseteils (22, 23) mit dem zu schleusenden Medium (28) gefüllt ist bzw. durchströmt ist und wenn die Dichtung (34, 35) mit ihrer Dichtfläche (43) an dem Absperrorgan (30) angedrückt ist, wobei eine Projektionsfläche (68) der in eine senkrecht zur Axialverschieberichtung (Doppelpfeil 65) der Dichtung (34, 35) angeordneten ersten Projektionsebene (69) projizierten Arbeitsflächen (66) gleich groß ist oder größer ist als eine Projektionsfläche (70) der in eine parallel zu der ersten Projektionsebene angeordnete zweite Projektionsebene (60) projizierten Kontaktflächen (67, 100).

2. Kugelhahn nach Anspruch 1, **dadurch gekennzeichnet, dass** die Dichtung (34, 35) ohne Einwirkung von an der Dichtung (34, 35) angreifenden Federkräften zwischen der Andrücklage und der Entlastungslage schaltbar ist.

3. Kugelhahn nach Anspruch 1 oder 2, **dadurch gekennzeichnet, dass** die Dichtfläche (43) der Dichtung (34, 35) in der Andrücklage und/oder in der Entlastungslage ohne Einwirkung von an der Dichtung (34, 35) angreifenden mechanischen Kräften an das Absperrorgan (30) angedrückt ist.

4. Kugelhahn nach einem der Ansprüche 1 bis 3, **dadurch gekennzeichnet, dass** die Dichtung (34, 35) ohne Einwirkung von an der Dichtung (34, 35) angreifenden mechanischen Kräften zwischen der Andrücklage und der Entlastungslage schaltbar ist.

5. Kugelhahn nach einem der Ansprüche 1 bis 4, **dadurch gekennzeichnet, dass** die Dichtfläche (43) der Dichtung (34, 35) in der Andrücklage und/oder in der Entlastungslage ausschließlich unter Einwirkung von an der Dichtung (34, 35) angreifenden hydraulischen und/oder pneumatischen Kräften an das Absperrorgan (30) angedrückt ist.

6. Kugelhahn nach einem der Ansprüche 1 bis 5, **dadurch gekennzeichnet, dass** die Dichtung (34, 35) ausschließlich unter Einwirkung von an der Dichtung (34, 35) angreifenden hydraulischen und/oder pneumatischen Kräften zwischen der Andrücklage und der Entlastungslage schaltbar ist.

7. Kugelhahn nach einem der Ansprüche 1 bis 6, **dadurch gekennzeichnet, dass** der Schaltkanal (45) über ein fluides Arbeitsmedium (47) mit positivem Druck (Pfeil 46) beaufschlagbar ist.

8. Kugelhahn nach einem der Ansprüche 1 bis 8, **dadurch gekennzeichnet, dass** der Schaltkanal (45) im Bereich der Dichtung (34, 35) quer zu dem Durchströmweg (26, 27) angeordnet ist.

9. Kugelhahn nach einem der Ansprüche 1 bis 8, **dadurch gekennzeichnet, dass** der Schaltkanal (45) in einen Schaltraum (48) mündet, der von quer zu dem Durchströmweg (26, 27) verlaufenden Wandteilen (51, 52) der Dichtung (34, 35) einerseits und des diese Dichtung (34, 35) aufnehmenden Gehäuseteils (22, 23) andererseits begrenzt ist.

10. Kugelhahn nach Anspruch 9, **dadurch gekennzeichnet, dass** der Schaltraum (48) von Ringstirnflächen (53, 54) der Dichtung (34, 35) einerseits und des diese Dichtung (34, 35) aufnehmenden Gehäuseteils (22, 23) andererseits begrenzt ist.

11. Kugelhahn nach Anspruch 10, **dadurch gekennzeichnet, dass** die Ringstirnflächen (53, 54) parallel zueinander angeordnet sind.

12. Kugelhahn nach einem der Ansprüche 9 bis 11, **dadurch gekennzeichnet, dass** die Dichtung (34, 35) über beiderseits des Schaltraumes (48) angeordnete Ringdichtungen (55, 56, 57, 58) zu dem Durchströmkanal (24, 25) des diese Dichtung (34, 35) aufnehmenden Gehäuseteils (22, 23) und der Durchgangsbohrung (32) des Absperrorgans (30) abgedichtet ist.

13. Kugelhahn nach einem der Ansprüche 9 bis 12, **dadurch gekennzeichnet, dass** die Dichtung (34, 35) an ihrem Außenumfang einen stufenförmigen Längsquerschnitt aufweist, der begrenzt ist von beiderseits des Schaltraumes (48) angeordneten Stützflächen (61, 62), über die sich die Dichtung (34, 35) an gegenüberliegenden Lagerflächen (63, 64) des diese Dichtung (34, 35) aufnehmenden Gehäuseteils (22, 23) abstützen kann und die eine begrenzte axiale Bewegung der Dichtung (34, 35) ermöglichen und der ferner begrenzt ist von dem quer zu dem Durchströmweg (26, 27) verlaufenden und den Schaltraum (48) begrenzenden Wandteil (51).

14. Kugelhahn nach Anspruch 13, **dadurch gekennzeichnet, dass** die zwischen dem Schaltraum (48) und der an dem Absperrorgan (30) anlegbaren Dichtfläche (43) der Dichtung (34, 35) angeordnete Stützfläche (61) einerseits des Schaltraumes (48) gegenüber der Stützfläche (62) andererseits des Schaltraumes (48) nach außen versetzt angeordnet ist.

15. Kugelhahn nach einem der Ansprüche 1 bis 14, **dadurch gekennzeichnet, dass** ausgehend von der Öffnungslage (38) bzw. der Schließlage des Absperrorgans (30), in welcher der Schaltkanal (45) mit Druck (Pfeil 46) beaufschlagt ist, so dass die Dichtung (34, 35) mit ihrer Dichtfläche (43) an dem Absperrorgan (30) angedrückt ist, zum Zwecke des Schaltens des Absperrorgans (30) mittels der Schaltwelle (36), der Schaltkanal (45) von Druck (Pfeil 46) entlastet wird, so dass die Dichtung (34, 35) ihre Entlastungslage einnehmen kann, wobei im Wesentlichen gleichzeitig das Absperrorgan (30) mittels der Schaltwelle (36) in seine Schließlage bzw. in seine Öffnungslage (38) geschaltet wird.

16. Kugelhahn nach einem der Ansprüche 1 bis 15, **dadurch gekennzeichnet, dass** sich die Arbeitsflächen (66) quer zu dem Durchströmweg (26, 27) nach innen an die Dichtfläche (43) der Dichtung (34, 35) anschließen.

17. Kugelhahn nach einem der Ansprüche 1 bis 16, **dadurch gekennzeichnet, dass** jeweils wenigstens eine der ringförmigen Dichtungen (34, 35), die an beiden Gehäuseteilen (22, 23) begrenzt axial beweglich gelagert sind und die das Absperrorgan (30) zwischen sich aufnehmen, mit Hilfe einer Einrichtung (40) zwischen einer axialen Andrücklage, in der die Dichtungen (34, 35) mit einer Dichtfläche (43) an das Absperrorgan (30) angedrückt sind, und einer Entlastungslage, in der die Dichtflächen (43) der Dichtungen (34, 35) mit einer gegenüber der Andrücklage reduzierten Flächenpressung an dem Absperrorgan (30) anliegen oder in der die Dichtungen (34, 35) von dem Absperrorgan (30) abgehoben sind, schaltbar ist.

## Claims

1. Ball valve for flow control of flowable media (28), comprising a housing (21), which consists of at least two housing parts (22, 23) each having a throughflow channel (24, 25) as throughflow path (26, 27), and with a spherical blocking element (30), which has a passage bore (32) as flow path (33) for selectable connection of the throughflow paths (26, 27) of the housing parts (22, 23) and which is received within only two housing parts (22, 23) of the housing (21) between annular seals (34, 35) and is switchable by means of a switch shaft (36) between an opening position (38) freeing the flow path (33) and a closed position blocking the flow path (33), where at least one of the seals (34, 35) receiving the blocking element (30) therebetween is mounted in one of the housing parts (22, 23) to be capable of limited axial movement and can be pressed by a sealing surface (43) against the blocking element (30), **characterised in that** at least one seal (34, 35) of the seals (34, 35) receiving the blocking element (30) therebetween is coupled with a device (40) by means of which the seal (34, 35) can be switched between an axial pressing position, in which the sealing surface (43) of the seal (34, 35) is pressed against the blocking element (30), and a relieved position, in which the sealing surface (43) of the seal (34, 35) bears against the blocking element (30) with an area pressure reduced by comparison with the pressing position or in which the seal (34, 35) is lifted off the blocking element (30), wherein the sealing surface (43) of the seal (34, 35) in the pressing position is pressed against the blocking element (30) without action of spring forces engaging the seal (34, 35) and wherein at least one of the seals (34, 35) receiving the blocking element (30) therebetween is connected with a switching channel (45), which is arranged to be seated relative to the throughflow channel (24, 25) and which is selectably loadable with pressure (arrow 46) of a separate working medium (47) so that the seal (34, 35) is switchable between the pressing position in which the sealing surface (43) of the seal (34, 35) is pressed against the blocking element (30) and the relieved position in which the sealing surface (43) of the seal (34, 35) bears against the blocking element (30) with an area pressure reduced by comparison with the pressing position or in which the seal (34, 35) is lifted off the blocking element (30), and wherein the seal (34, 35) has working surfaces (64) facing in the direction of the blocking element (30) and contact surfaces (67, 100) facing away therefrom, which are loaded by the medium (28), which is to be controlled in flow, when the throughflow channel (24, 25) of the housing part (22, 23) receiving this seal (34, 35) is filled or flowed through by the medium (28) to be controlled in flow and when the seal (34, 35) is pressed by its sealing surface (43) against the blocking element (30), wherein a projection surface (68) of the working surfaces (66) projected into a first projection plane (69) arranged perpendicularly to the axial displacement direction (double arrow 65) of the seal (34, 35) is equal in size to or greater in size than a projection surface (70) of the contact surfaces (67, 100) projected into a second projection plane (60) arranged parallel to the first projection plane.

2. Ball valve according to claim 1, **characterised in that** the seal (34, 35) is switchable between the pressing position and the relieved position without action of spring forces engaging the seal (34, 35).

3. Ball valve according to claim 1 or 2, **characterised in that** the sealing surface (43) of the seal (34, 35) in the pressing position and/or in the relieved position is pressed against the blocking element (30) without action of mechanical forces engaging the seal (34, 35).

4. Ball valve according to one of claims 1 to 3, **characterised in that** the seal (34, 35) is switchable between the pressing position and the relieved position without action of mechanical forces engaging the seal (34, 35).

5. Ball valve according to one of claims 1 to 4, **characterised in that** the sealing surface (43) of the seal (34, 35) in the pressing position and/or in the relieved position is pressed against the blocking element (30) exclusively under the action of hydraulic and/or pneumatic forces engaging the seal (34, 35).

6. Ball valve according to one of claims 1 to 5, **characterised in that** the seal (34, 35) is switchable between the pressing position and the relieved position exclusively under the action of hydraulic and/or pneumatic forces engaging the seal (34, 35).

7. Ball valve according to one of claims 1 to 6, **characterised in that** the switching channel (45) can be loaded with positive pressure (arrow 46) by way of a fluid working medium (47).

8. Ball valve according to one of claims 1 to 8, **characterised in that** the switching channel (45) is arranged in the region of the seal (34, 35) transversely to the throughflow path (26, 27).

9. Ball valve according to one of claims 1 to 8, **characterised in that** the switching channel (45) opens into a switching space (48) which is bounded on the one hand by wall parts (51, 52), which extend transversely to the throughflow path (26, 27), and on the other hand by the housing part (22, 23) receiving this seal (34, 35).

10. Ball valve according to claim 9, **characterised in that** the switching space (48) is bounded on the one hand by annular end surfaces (53, 54) of the seal (34, 35) and on the other hand by the housing part (22, 23) receiving this seal (34, 35).

11. Ball valve according to claim 10, **characterised in that** the annular end surfaces (53, 54) are arranged parallel to one another.

12. Ball valve according to one of claims 9 to 11, **characterised in that** the seal (34, 35) is sealed by way of annular seals (55, 56, 57, 58), which are arranged on both sides of the switching space (48), relative to the throughflow channel (24, 25) of the housing part (22, 23) receiving this seal (34, 35) and the passage bore (32) of the blocking element (30).

13. Ball valve according to one of claims 9 to 12, **characterised in that** the seal (34, 35) has at its outer circumference a step-shaped longitudinal cross-section which is bounded by support surfaces (61, 62), which are arranged on both sides of the switching space (48) and by way of which the seal (34, 35) can be supported at opposite bearing surfaces (63, 64) of the housing part (22, 23) receiving this seal (34, 35) and which enable a limited axial movement of the seal (34, 35) and which is further bounded by the wall part (51) extending transversely to the throughflow path (26, 27) and bounding the switching space (48).

14. Ball valve according to claim 13, **characterised in that** the support surface (61), which is arranged between the switching space (48) and the sealing surface (43), which can be placed against the blocking element (30), of the seal (34, 35), of the switching space (48) on the one hand is arranged to be offset outwardly relative to the support surface (62) of the switching space (48) on the other hand.

15. Ball valve according to one of claims 1 to 14, **characterised in that** starting out from the opening position (38) or the closed position of the blocking element (30), in which the switching channel (45) is loaded with pressure (arrow 46) so that the seal (34, 35) is pressed by its sealing surface (43) against the blocking element (30), for the purpose of switching the blocking element (30) by means of the switch shaft (36) the switching channel (45) is relieved of pressure (46) so that the seal (34, 35) can adopt its relieved position, wherein at substantially the same time the blocking element (30) is switched by means of the switch shaft (36) into its closed position or into its opening position (38).

16. Ball valve according to one of claims 1 to 15, **characterised in that** the working surfaces (66) inwardly adjoin the sealing surface (43) of the seal (34, 35) transversely to the throughflow path (26, 27).

17. Ball valve according to one of claims 1 to 16, **characterised in that** in each instance at least one of the annular seals (34, 35), which are mounted at the two housing parts (22, 23) to be capable of limited axial movement and which receive the blocking element (30) therebetween, can be switched with the help of a device (40) between an axial pressing position, in which the seals (34, 35) are pressed by a sealing surface (43) against the blocking element (30), and a relieved position, in which the sealing surfaces (43) of the seals (34, 35) bear against the blocking element (30) with an area pressure reduced relative to the pressing position or in which the seals (34, 35) are lifted off the blocking element (30).

## Revendications

1. Vanne à boisseau sphérique pour sasser des milieux fluides (28), avec un carter (21) qui consiste en au moins deux parties de carter (22, 23) comportant chacune une canalisation d'écoulement (24, 25) comme voies d'écoulement (26, 27), et par un organe d'obturation (30) sphérique comportant un trou traversant (32) comme voie d'écoulement (33) pour la communication optionnelle des voies d'écoulement (26, 27) des parties de carter (22, 23), organe d'obturation qui est logé à l'intérieur de deux parties seulement de carter (22, 23) du carter (21) entre des joints (34, 35) annulaires et qui peut être commuté au moyen d'un arbre de commande (36) entre une position d'ouverture (38) libérant la voie d'écoulement (33) et une position de fermeture obturant la voie d'écoulement (33), sachant qu'au moins un des joints (34, 35) logeant entre eux l'organe d'obturation (30) est monté de façon à être mobile axialement dans une mesure limitée dans une des parties de carter (22, 23) et peut être appliqué avec une surface d'étanchéité (43) contre l'organe d'obturation (30), **caractérisé en ce qu'**au moins un joint (34, 35) des joints (34, 35) logeant entre eux l'organe d'obturation (30) est accouplé à un dispositif (40) au moyen duquel le joint (34, 35) est commutable entre une position axiale d'application dans laquelle la surface d'étanchéité (43) du joint (34, 35) est appliquée contre l'organe d'obturation (30), et une position de décharge, dans laquelle la surface d'étanchéité (43) du joint (34, 35) s'appuie contre l'organe d'obturation (30) avec une pression surfacique réduite par rapport à la position d'application ou dans laquelle le joint (34, 35) est soulevé de l'organe d'obturation (30), sachant que dans la position d'application, la surface d'étanchéité (43) du joint (34, 35) est appliquée contre l'organe d'obturation (30) sans l'effet de forces élastiques de ressort agissant sur le joint (34, 35), et sachant qu'au moins un des joints (34, 35) logeant entre eux l'organe d'obturation (30) est relié à un canal de commutation (45) disposé étanché par rapport au canal d'écoulement (24, 25), qui peut être mis en option sous la pression (flèche 46) d'un fluide de travail (47) séparé, de telle sorte que le joint (34, 35) peut être commuté entre la position d'application, dans laquelle la surface d'étanchéité (43) du joint (34, 35) est appliquée contre l'organe d'obturation (30) et la position de décharge, dans laquelle la surface d'étanchéité (43) du joint (34, 35) est appliquée contre l'organe d'obturation (30) avec une pression surfacique réduite par rapport à la position d'application ou dans laquelle le joint (34, 35) est soulevé de l'organe d'obturation (30), et sachant que le joint (34, 35) comporte des surfaces de travail (66) tournées en direction de l'organe d'obturation (30) et des surfaces de contact (67, 100) détournées de ce dernier, qui sont soumises au fluide à sasser (28) quand la canalisation d'écoulement (24, 25) de la partie de carter (22, 23) logeant ce joint (34, 35) est remplie ou est traversée par le fluide à sasser (28) et quand le joint (34, 35) est appliqué contre l'organe d'obturation (30) par sa surface d'étanchéité (43), sachant qu'une surface de projection (68) des surfaces de travail (66) projetées dans un premier plan de projection (69) disposé perpendiculairement à la direction de décalage axial (double flèche 65) du joint (34, 35) est égale à ou plus grande qu'une surface de projection (70) des surfaces de contact (67, 100) projetées dans un deuxième plan de projection (60) disposé parallèlement au premier plan de projection.

2. Vanne à boisseau sphérique selon la revendication 1, **caractérisée en ce que** le joint (34, 35) peut être commuté entre la position appliquée et la position déchargée sans l'action de forces élastiques de ressort sur le joint (34, 35).

3. Vanne à boisseau sphérique selon la revendication 1 ou 2, **caractérisée en ce que** la surface d'étanchéité (43) du joint (34, 35) est appliquée contre l'organe d'obturation (30) dans la position appliquée et/ou dans la position déchargée sans l'action de forces mécaniques s'exerçant sur le joint (34, 35).

4. Vanne à boisseau sphérique selon l'une des revendications 1 à 3, **caractérisée en ce que** le joint (34, 35) peut être commuté entre la position appliquée et la position déchargée sans l'action de forces mécaniques s'exerçant sur le joint (34, 35).

5. Vanne à boisseau sphérique selon l'une des revendications 1 à 4, **caractérisée en ce que** la surface d'étanchéité (43) du joint (34, 35) est appliquée contre l'organe d'obturation (30) dans la position appliquée et/ou dans la position déchargée exclusivement sous l'action de forces hydrauliques et/ou pneumatiques s'exerçant sur le joint (34, 35).

6. Vanne à boisseau sphérique selon l'une des revendications 1 à 5, **caractérisée en ce que** le joint (34, 35) peut être commuté entre la position appliquée et la position déchargée exclusivement sous l'action de forces hydrauliques et/ou pneumatiques s'exerçant sur le joint (34, 35).

7. Vanne à boisseau sphérique selon l'une des revendications 1 à 6, **caractérisée en ce que** le canal de commutation (45) peut être soumis à une pression positive (flèche 46) par un milieu de travail fluide (47).

8. Vanne à boisseau sphérique selon l'une des revendications 1 à 8, **caractérisée en ce que**, dans la zone du joint (34, 35), le canal de commutation (45) est disposé transversalement par rapport à la voie d'écoulement (26, 27).

9. Vanne à boisseau sphérique selon l'une des revendications 1 à 8, **caractérisée en ce que** le canal de commutation (45) débouche dans un espace de commutation (48), qui est limité d'une part par des parties de paroi (51, 52) du joint (34, 35) s'étendant transversalement par rapport à la voie d'écoulement (26, 27) et d'autre part par la partie de carter (22, 23) logeant ce joint (34, 35).

10. Vanne à boisseau sphérique selon la revendication 9, **caractérisée en ce que** l'espace de commutation (48) est limité d'une part par des surfaces frontales annulaires (53, 54) du joint (34, 35) et d'autre part par la partie de carter (22, 23) logeant ce joint (34, 35).

11. Vanne à boisseau sphérique selon la revendication 10, **caractérisée en ce que** les surfaces frontales annulaires (53, 54) sont disposées parallèlement les unes aux autres.

12. Vanne à boisseau sphérique selon l'une des revendications 9 à 11, **caractérisée en ce que** le joint (34, 35) est étanché par rapport à la canalisation d'écoulement (24, 25) de la partie de carter (22, 23) logeant ce joint (34, 35) par des joints annulaires (55, 56, 57, 58) disposés des deux côtés de l'espace de commutation (48).

13. Vanne à boisseau sphérique selon l'une des revendications 9 à 12, **caractérisée en ce que** le joint (34, 35) présente à sa périphérie extérieure une section longitudinale en forme de gradins qui est limitée par des surfaces d'appui (61, 62) disposées des deux côtés de l'espace de commutation (48), par lesquelles le joint (34, 35) peut s'appuyer sur les surfaces d'appui (63, 64) opposées de la partie de carter (22, 23) logeant ce joint (34, 35) et qui permettent un mouvement axial limité du joint (34, 35) et qui est limitée en outre par la partie de paroi (51) s'étendant transversalement par rapport à la voie d'écoulement (26, 27) et limitant l'espace de commutation (48).

14. Vanne à boisseau sphérique selon la revendication 13, **caractérisée en ce que** la surface d'appui (61) disposée entre l'espace de commutation (48) et la surface d'étanchéité (43) du joint (34, 35) pouvant être appliquée contre l'organe d'obturation (30) est disposée décalée, par rapport à la surface d'appui (62) d'un côté de l'espace de commutation (48), vers l'extérieur de l'autre côté de l'espace de commutation (48).

15. Vanne à boisseau sphérique selon l'une des revendications 1 à 14, **caractérisée en ce que**, partant de la position d'ouverture (38), respectivement de la position de fermeture de l'organe d'obturation (30), dans laquelle la canalisation de commutation (45) est soumise à la pression (flèche 46), de telle sorte que le joint (34, 35) est appliqué avec sa surface d'étanchéité (43) contre l'organe d'obturation (30), dans le but de la commutation de l'organe d'obturation (30) au moyen de l'arbre de commande (36), la canalisation de commutation (45) est déchargée de la pression (flèche 46), de telle sorte que le joint (34, 35) peut prendre sa position déchargée, sachant qu'essentiellement en même temps l'organe d'obturation (30) est commuté au moyen de l'arbre de commande (36) dans sa position de fermeture, respectivement dans sa position d'ouverture (38).

16. Vanne à boisseau sphérique selon l'une des revendications 1 à 15, **caractérisée en ce que** les surfaces de travail (66) se raccordent vers l'intérieur à la surface d'étanchéité (43) du joint (34, 35), transversalement par rapport à la voie d'écoulement (26, 27).

17. Vanne à boisseau sphérique selon l'une des revendications 1 à 16, **caractérisée en ce que** respectivement au moins un des joints annulaires (34, 35) qui sont montés sur les deux parties de carter (22, 23) de façon à être mobiles axialement dans une mesure limitée et qui logent entre eux l'organe d'obturation (30), peut être commuté à l'aide d'un dispositif (40) entre une position axiale d'application, dans laquelle les joints (34, 35) sont appliqués avec une surface d'étanchéité (43) contre l'organe d'obturation (30) et une position déchargée, dans laquelle les surfaces d'étanchéité (43) des joints (34, 35) s'appuient sur l'organe d'obturation (30) avec une pression surfacique réduite par rapport à la position d'application ou dans laquelle les joints (34, 35) sont soulevés de l'organe d'obturation (30).
